# FASCICULE DE BREVET EUROPEEN

(11) **EP 0 750 122 B1**
(45) Date de publication et mention de la délivrance du brevet: **28.11.2001**
(21) Numéro de dépôt: 96500079.7
(22) Date de dépôt: 19.06.1996
(51) Int. Cl.: F16B 43/00

(54) **Rondelle**
Beilagscheibe
Washer

(30) Priorité: 21.06.1995 ES 9501334
(43) Date de publication de la demande: 27.12.1996
(73) Titulaire: MIKALOR, S.A., 08205 Sabadell (Barcelona) (ES); Société Anonyme dite: REGIE NATIONALE DES USINES RENAULT, 92109 Boulogne Billancourt (FR)
(72) Inventeur: Palau Dominguez, Ramon, 08205 Sabadell, Barcelona (ES)
(74) Mandataire: Canela Bresco, Arturo

(56) Documents cités:
- EP-A- 0 493 224
- DE-U- 8 627 657
- FR-A- 2 509 811
- US-A- 3 645 311

## Description

L'objet du présent Brevet d'Invention fait rapport à une rondelle selon la préambule de la revendication 1.

À l'heure actuelle, on connaît bien les rondelles consistant, comme il est déjà vu, d'un disque métallique ayant un orifice axil, passant.

Les rondelles ou bagues, s'emploient pour les placer à côté d'un écrou et servent de coussin pour réduire la friction de l'écrou contre la surface juxtaposée à celle-ci.

Dans la plupart des cas, lorsque dans les constructions mécaniques on emploie des monteuses automatiques d'écrous, il se produit l'incovénient de par lequel, lorsque l'écrou et la rondelle sont assemblés, avant d'embrocher ceux-ci à la tige de forage, ils se détachent fort facilement, en tombant ensuite.

Ce qui entraîne devoir placer un nouvel écrou sur la monteuse automatique, afin de remplacer celle qui s'est détaché.

Cette opération, qui peut sembler apparemment simple, ne l'est pas dans la pratique, car le montage des écrou et de leurs bagues correspondantes est effectué par des couples; donc, il s'avère difficile de placer à l'endroit correct de la monteuse, la rondelle qui est tombée.

Jusqu'à un tel degré que, lorsque la rondelle s'est détachée, l'ouvrier monteur préfère davantage se passer de l'écrou pair, au lieu de perdre du temps à démonter la monteuse et remettre une nouvelle rondelle pour remplacer celle qui s'est détachée.

Par conséquent, les industriels à supprimer la mise en place de la rondelle sont déjà nombreux.

Pourtant, étant donné que la rondelle est un corps laminaire qui se place entre la poupée de la tige de forage et la surface d'appui qui conviendra, et qu'elle fait la fonction d'un coussin amortisseur, lorsque l'on la supprime, on ne peut point bénéficier des avantages qu'elles offre.

Voici un inconvénient important.

Compte tenu de cela, il a été conçu que la rondelle agisse simultanément comme un écrou et qu'en plaçant un seul élément, on puisse obtenir l'effet des deux ensembles de la rondelle et de l'écrou.

Ce genre de rondelles ou bagues-écrous, qui agissent ou pas en tant que pinces de raccord de la rondelle sur le rebord saillant d'une surface d'appui, ont le bord annulaire de leur orifice annulairement élevé; sur la paroi interne du rebord cité, on y effectue le filetage hélicoidal, avec quoi la rondelle se transforme en écrou.

Cette réalisation peut être constatée sur le Brevet Européen nº 326.481; en observant les figures 1 et 2, on voit clairement que la couronne annulaire entourant l'orifice de la bague, pour l'emplacement du filetage hélicoidal correspondant, qui transforme la bague en écrou.

Aussi, sur le Brevet Européen 407.282, on apprécie sur les figures 1 à 4, et notamment sur la figure 1, où la représentation est faite en perspective, le parapet à filetage hélicoidal sur la paroi interne annulaire. Ici aussi, la bague se transforme en écrou.

Afin de rendre plus facile la formation du filetage hélicoidal qui transforme la rondelle en écrou, on procède aussi au filetage par étampage d'une zone annulaire sur une rampe hélicoidale prochaine au bord tronconique de l'orifice à ligne radiale de coupure, qui interrompt la continuité de la paroi.

Ce type comprend les clips-écrous-bagues des registres de la Propriétés Industielle, tels que ceux des Brevets Allemands nº 35 36 473 et nº 28 28 078; le Modèle d'Utilité Espagnol nº 9200969, de la Société Mikalor, S.A., qui est la même pétitionnaire de cette nouvelle demande; le Modèle d'Utilité Espagnol nº 255.254; le Brevet Européen nº 390.062; et le Modèle d'Utilité Espagnol nº 272.068.

Cependant, tous les exemples cités recherchent l'effet de filet, même s'il s'agit d'un filet simple, moyennant la formation du filet en question par étampage.

Afin d'éviter tous ces problèmes et pour que la rondelle ne soit qu'une bague, c'est-à-dire, sans pour autant être un écrou, et qu'elle puisse rester bloquée à un point déterminé de la longueur totale de la tige de forage intercalée, la nouvelle pince a été créée.

Étant donné qu'il n'y a pas de bord au filetage hélicoidal dans l'orifice de la rondelle, ni de coupures perpendiculaires, et suivant le contour de l'orifice pour créer l'effet de filet avec la dénivellation du bord, on évite d'avoir nécessairement besoin d'un vis à filet hélicoidal calibré, ou bien d'effectuer l'opération de coupure du bord.

Il suffit d'enfiler la tige dans la bague, ou bien une saillie annulaire qui servira d'enchâssure et d'appui de deux pattes d'appui, que l'on place sur la rondelle.

On parvient ainsi, sans aucun filet, à ce que la bague soit élastiquement attachée à la tige, sans que la rondelle puisse se détacher accidentalement.

Le brevet USA N° 3.645.311 de Tinnerman présente une rondelle correspondant à la préambule de la revendication 1 dont les bras de support se terminent en deux demi-collerettes opposées et séparées entre elles, lesquelles forment un anneau guide à l'extrémité de la vis d'assemblage, tandis que sur l'orifice de la planche d'ensemble il apparaît un rebord affilé qui est disjoint de façon hélicoïdale dans le but d'enfiler le filetage hélicoïdal de la vis enfilée.

La construction de la présente invention permet, grâce à l'action des pattes à flexion entrecroisées de manière particulière, un accomplissement constructif simple et efficient, sans l'intervention de rebord hélicoïdal, qu'il soit affilé ou pas, et sans l'utilisation de collerettes pour guider la vis lors de son passage d'introduction vers la rondelle.

Moyennant la nouvelle organisation de la construction, l'emploi des écrous héxagonaux de la norme DIN a été supprimé, ainsi que les rondelles courantes qui sont nécessaires au montages des premiers.

Il en résulte un montage et un démontage fort faciles.

D'autre part, et dans l'hypothèse où ils conviendraient, les tiges de forage à saillie annulaire d'appui pour les pattes érectiles des bagues perfectionnées, seront remplacées, lorsqu'il sera estimé convenables, par des vis filetés, dans lesquels le passage de filet ne doit pas être de précision par rapport à l'orifice de la bague, car dans ce cas ce qui compte vraiment c'est de pouvoir utiliser la dépression hélicoidale existant entre deux filets hélicoidaux pour l'appui lattéral des deux pattes de la rondelle.

Il y a encore un avantage: lorsque les rondelles en question sont placées à des points soumis à la forte action négative de la chaleur, leurs pattes érectiles agissent en tant qu'éléments dissipateurs de la chaleur qui répercute sur la surface de la rondelle, en évitant ainsi que la chaleur s'accumule sur la bague en question.

On évite ainsi que la surface de la rondelle se bombe à cause de l'action négative de l'accumulation de chaleur.

D'autre part, dès que la rondelle aura été montée, celle-ci reste placée avec une tension résiduelle lattérale, constante et élevée, qui est la fonctionnalité du produit, tandis que la tension lattérale serre chaque patte érectile contre deux points opposés de la cavité annulaire ou ellipsoïdale de la tige de forage enfilée; voici comment on parvient à ce que les vibrations, les dilatations ou les contractions produites par des changements brusques de la température soient absorbés par la tension résiduelle, lattérale, sans créer pour autant des problèmes de fuites.

La nouvelle rondelle peut être montée et démontée fort facilement sur le point souhaité, même à l'aide d'outils automatiques, quoique pour son entretien, le démontage peut être effectué avec des outils communs, non spéciaux.

Pour une interprétation correcte, le cas cité par la suite décrit la réalisation pratique, à titre d'exemple non-limitatif, d'une rondelle fabriqué d'après les particularités de l'invention; une feuille de représentant des dessins est attachée, dans laquelle:

La figure 1 représente de façon schématique et dans le sens de la hauteur, une rondelle platte montée sur la tige de forage correspondante; la figure 2 représente la même vue que la figure 1, quoique dans ce cas précis, la rondelle a une déformation centrale, en forme de petite casserole, en accord avec la forme de la partie saillante sur laquelle la bague devra s'accoupler.

La figure 3 est un tracé à 90º de la figure 2, tandis que la figure 4 est un plan supérieur de la figure 2.

Quant à la figure 5, l'une des tiges de forage de la bague est placée à l'endroit souhaité, ce qui permet d'apprécier la cavité annulaire déterminée par la saillie annulaire.

L'invention consiste à ce que deux points qui se trouvent diamétralement opposés du bord de la rondelle 1, sont perpendiculairement placés, deux pattes laminaires 2 et 3, érectiles, lesquelles s'accoudent en arc, en formant une boucle, 4 et 5, dont les extrêmités, 6 et 7, s'entrecroisent de façon inclinée.

L'entrecroisement des deux pattes inclinées, 2 et 3, présente une séparation, 8, dont la largeur est sensiblement inférieure à celle du diamètre de l'orifice central, 9, de la bague.

La ligne d'entrecroisement des deux pattes de la bague est située sur le prolongement de la ligne de l'axe descendant de l'orifice de la rondelle, 9, et sur un point plus bas de celle-ci.

La hauteur, par rapport à la tige de forage de ce point d'entrecroisement, reste variable, à volonté, en fonction de si l'on souhaite obtenir un effet de ressort moindre ou plus élevé, des deux pattes entrecroisées, 2 et 3, en pressionant lattéralement contre le corps de la tige, 10, pour laquelle il a été prévu, au moins, un appui annulaire, 11.

Le degré majeur ou moindre de l'action à ressort est complémenté par le majeur ou moindre jaugeage de la boucle, 4 et 5, de chacune des patte entrecroisées, 2 et 3.

Lorsque l'on introduit la tige, 10, munie d'un échelon annulaire, 11, en traversant l'orifice, 9, de la rondelle, 1, et que l'on la fait émerger du côté opposée à celle-ci, lors du mouvement d'introduction, la tige arrive à atteindre la séparation, 8, qui existe entre les deux pattes entrecroisées, 2 et 3; étant donné que le diamètre de la tige enfilée, 10, est plus grand que la largeur, 8, de la séparation entre les deux pattes entrecroisées, 2 et 3, celles-ci sont forcées de se déplacer de côté, à cause de l'épaisseur du corps de la tige, 10, laquelle reste interposée entre elles; par conséquent, les deux pattes, 2 et 3, sont tendues en faisant de la pression lattéralement contre le corps de la tige, 10, notamment sur la dépression produite par la saillie, 11, tandis qu'elles sont en même temps ancrées à celle-ci.

Chacune des deux travées droites proches au bout des deux pattes entrecroisées, 2 et 3, de la rondelle, présentent tout le long de leur bord interne, une petite joue droite, légèrement inclinée vers le haut, 12 et 13, qui augmente la surface de contact du bord de chaque patte; en outre, elle tend à renforcer sur ce point, chacune des pattes, 2 et 3, afin d'augmenter leur résistance au gondolement, à cause de la chaleur, de la surface des pattes dont il est question.

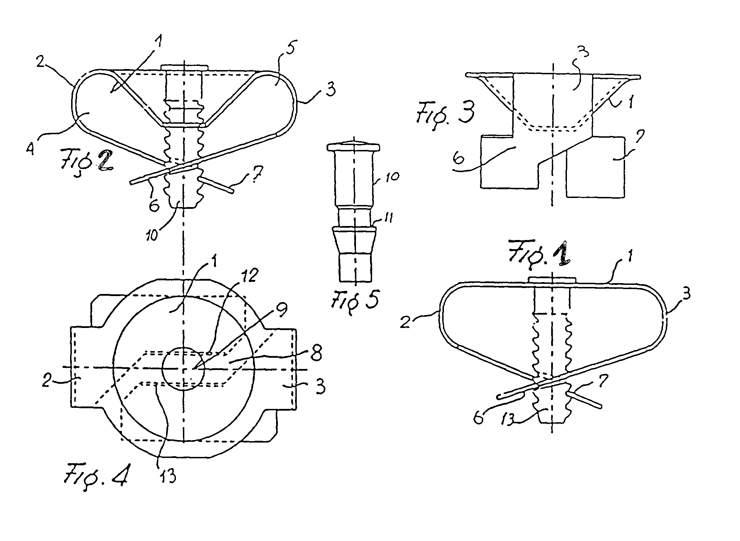

Lorsque la rondelle, 1, sera placée en juxtaposition para rapport à la surface saillante d'une surface platte, elle présentera sa surface adéquatement conformée, de sorte à l'adapter à la surface saillante citée, d'après les représentations qui apparaissent sur les figures 2, 3 et 4.

Lorsque, au lieu d'utiliser une tige, 10, à saillie annulaire, 11, on utilisera un vis à filetage hélicoidal, sans que celui-ci soit forcément de précision, d'après les figures 1, 2 et 4, dans ce cas les extrêmités des pattes entrecroisées, 2 et 3, pénètreront également dans la cavité ellipsoïdale continue du vis, située entre les deux filets juxtaposés, comme elles le font dans la cavité annulaire de la tige, 11.

## Revendications

1. Rondelle (1) comprenant deux pattes (2,3) qui naissent sur deux points diamétralement opposées au rebord de la base de la rondelle, les deux pattes étant érectiles et opposées, ces pattes ayant, prés de leur naisance et après celui-ci, une boucle (4,5), dont l'arc descendant convient le plus, en fonction de si l'on souhaite octroyer un degré majeur ou moindre de tension lattérale des pattes, le point d'opposition étant sur le même prolongement de l'axe de l'orifice (9) de la rondelle, à ce point d'opposition une séparation (8) entre les pattes (2,3) étant prévue, dont la largeur est plus réduite que celle du diamètre de l'orifice (9) de la rondelle, le bord interne de chaque patte, sur la zone qui concorde avec le prolongement de l'axe de l'orifice de la rondelle, ayant un petit rebord incliné (12,13), adapté à entrer en contact avec la surface d'une tige (10) introduite dans l'orifice (9) et adapté à exercer ainsi de la pression lateràle sur deux côtés diamétrallement opposées de la tige (10), la rondelle étant **caracterisée en ce que** les bords de la rondelle qui donnent naissance aux pattes (2,3) se situent à un angle droit en regard des rebords des pattes.

## Patentansprüche

1. Unterlegscheibe (1), umfassend zwei Klemmen (2, 3), die von zwei einander diametral entgegengesetzten Punkten am Rand der Basis der Unterlegscheibe ausgehen, wobei die zwei Klemmen aufrichtbar und einander entgegengesetzt sind, wobei diese Klemmen in der Nähe ihres Ausgangspunkts und danach eine Schleife (4, 5) aufweisen, deren hinablaufender Bogen am zweckmäßigsten ist, je nachdem, ob man einen höheren oder niedrigeren Grad an seitlicher Spannung der Klemmen erlauben möchte, wobei sich der Widerstandspunkt auf derselben Verlängerung der Achse der Öffnung (9) der Unterlegscheibe befindet, wobei an diesem Widerstandspunkt eine Trennung (8) zwischen den Klemmen (2, 3) vorgesehen ist, deren Breite geringer als die des Durchmessers der Öffnung (9) der Unterlegscheibe ist, wobei die Innenkante jeder Klemme im Bereich, der mit der Verlängerung der Achse der Öffnung der Unterlegscheibe übereinstimmt, einen kleinen schrägen Rand (12, 13) aufweist, darauf ausgerichtet, mit der Oberfläche eines in die Öffnung (9) eingeführten Schafts (10) in Berührung zu treten, und darauf ausgerichtet, auf diese Weise seitlichen Druck auf zwei einander diametral entgegengesetzte Seiten des Schafts (10) auszuüben, wobei die Unterlegscheibe **dadurch gekennzeichnet ist, dass** sich die Kanten der Unterlegscheibe, von denen die Klemmen (2, 3) ausgehen, in einem rechten Winkel zu den Rändern der Klemmen befinden.

## Claims

1. Washer (1) comprising two limbs (2, 3) which extend from two diametrically opposite points of the edge of the base of the washer, the two limbs being erectile and opposed, the limbs having, near their point of origin and after their point of origin, a loop (4, 5), the descending arc of which is the most suitable, depending on whether it is desired to confer a greater or lesser degree of lateral pressure of the limbs, the point of opposition being on the axis of the opening (9) of the washer, a separation (8) between the limbs (2, 3) being provided at that point of opposition, the width of which separation is smaller than that of the diameter of the opening (9) of the washer, the inner edge of each limb, at the region coinciding with the axis of the opening of the washer, having a small inclined edge (12, 13) which is adapted to come into contact with the surface of a rod (10) introduced into the opening (9) and which edge (12, 13) is adapted thus to exert lateral pressure on two diametrically opposite sides of the rod (10), the washer being **characterised in that** the edges of the washer from which the limbs (2, 3) extend are arranged at right-angles to the edges of the limbs.
